# EUROPEAN PATENT APPLICATION

(11) **EP 4 567 703 A1**
(43) Date of publication of application: **11.06.2025**
(21) Application number: 24217444.9
(22) Date of filing: 04.12.2024
(51) Int. Cl.: G06Q 20/20, G06Q 20/40, G06Q 20/38

(54) **METHOD OF ELECTRONIC ASSOCIATION BETWEEN ELEMENTS AND PAYMENT SYSTEMS**

(30) Priority: 05.12.2023 IT 202300026034; 05.12.2023 CH 13532023
(71) Applicant: Cornèr Banca SA, 6900 Lugano (CH)
(72) Inventor: Marchetto, Jarno, 6952 Canobbio (CH)
(74) Representative: PGA S.p.A., Milano, Succursale di Lugano

(57) **Abstract**

Method of electronic association between elements and payment systems, comprising:
- a step of electronic acquisition of a characteristic (2) of an element (1) through an acquisition device (11), preferably wherein said characteristic is destined to allow the univocal identification of said element (1);
- a step of electronic generation of a primary file (14) containing at least characteristic electronic data (14d), identifying said at least a characteristic (2), and a step of memorization of said primary file (14) in a memory (15),
- an electronic association (A) between said primary file (14) and a payment or financial instrument (21, 22) assigned to a subject (100),
- a step of assignment of an economic availability, comprising at least a univocal assignment, to said primary file (14), of an economic availability (20c) associated to said payment or financial instrument (21, 22),
- a step of provision of an electronic access, comprising making accessible an electronic search, on said memory (15), of at least said primary file (14), through an electronic comparison between at least a comparison file (414) and said primary file (14).

## Description

### Technical field

The present invention pertains to the field of electronic systems and methods for identifying elements and to payment systems and methods.

### Known art

Traditional payment methods involve the use of cash or payment cards, as credit cards or debit cards. In the last years, payment methods involving the use of electronic currencies as for example bitcoins have become widespread.

It is also known that the data of a credit card can be stored on a cell phone, and the cell phone itself can be used to make payments.

### Summary

The Applicant has noted that it is possible to release the payment of a determined amount from an element traditionally destined to the payment itself, and in particular that it is possible to release the value of the element from the value with which, through a determined element, a payment can be arranged or executed.

The object of the present disclosure is destined to fill that need to release payments from the use of elements, in particular objects, that are traditionally destined to be a means of payment and to release the value of the element from the value of the amount paid.

The object of the present disclosure is described in some of its aspects which can be combined between them or with portions of the description or claims.

According to the present disclosure it is described a method of electronic association between elements and payment systems, comprising:
- a step of electronic acquisition of at least a characteristic (2) of an element (1), real or virtual, owned by, and/or associated to, a subject or user (100), through an acquisition device (11), preferably wherein said characteristic (2) is suitable for, and/or destined to, and/or configured to, allow a univocal identification of said element (1);
- a step of electronic generation of a primary file (14) containing at least characteristic electronic data (14d), univocally identifying said at least a characteristic (2) of said element (1), and a step of memorization of said primary file (14) in a memory (15),
- a step of association, comprising an electronic association (A) between said primary file (14) and at least a payment or financial instrument (21, 22), preferably associated to a financial or banking institute (20), preferably said payment or financial instrument (21, 22) being owned by, and/or selectively assigned to, said subject or user (100),
- a step of assignment of an economic availability, said step of assignment of said economic availability being preferably result of, and/or temporally successive to, said step of association and comprising at least a univocal assignment, to said primary file (14), of an economic availability (20c) associated to said payment or financial instrument (21, 22),
- a step of provision of an electronic access, comprising making accessible, preferably to a remote verification data processing unit (412), an electronic search, on said memory (15), of at least said primary file (14), through an electronic comparison between at least a comparison file (414) containing characteristic electronic data (14d), identifying at least a characteristic (2) of a comparison element (1'), and said primary file (14).

According to a further non-limiting aspect, the step of electronic acquisition of at least a characteristic (2) of the element (1) takes place on a pre-existing, optionally natural, element.

According to a further non-limiting aspect, said method excludes a realization of the element (1), preferably in a substantially integral way, to realize at least said step of electronic acquisition of said at least a characteristic (2) of the element (1).

According to a further non-limiting aspect, said method, in particular at least said step of association and said step of assignment, makes said element (1) become a payment instrument, preferably a subordinate payment instrument.

According to a further non-limiting aspect, said step of association is performed or made possible by a data processing unit (12) operatively connected to said acquisition device (11) or by a data processing unit of said financial or banking institute (20).

According to a further non-limiting aspect, said step of assignment of an economic availability is a step of electronic assignment of an economic availability.

According to a further non-limiting aspect, said step of assignment of said economic availability is performed or made possible by a data processing unit (12) operatively connected to said electronic device (11) or by a data processing unit of said financial or banking institute (20).

According to a further non-limiting aspect, said characteristic (2) is a univocal characteristic of said element (1) or is a characteristic destined to allow a univocal identification of said element (1),
and/or said characteristic (2) is a characteristic physical and/or intrinsic and/or naturally present on said element (1) or is a characteristic (2) artificially brought on said element (1) and/or is a visible characteristic of said element (1) or is a hidden characteristic (2) of said element (1).

According to a further non-limiting aspect, said characteristic (2) differs from an alphanumerical code and/or differs from a known visual code, and/or is a characteristic (2) representable by means of an image.

According to a further non-limiting aspect, said element (1) is different from an element traditionally used for a payment, preferably is different from an element traditionally used for an electronic payment, and/or wherein said element (1) is not a payment card, and/or is not a banknote and/or is not a bank account.

According to a further non-limiting aspect, said primary file (14) is a limited access file, preferably limited to said subject or user (100).

According to a further non-limiting aspect, in particular:
- at least the characteristic electronic data (14d) of said primary file (14) can be altered exclusively by said subject or user (100) after an electronic introduction and verification of access credentials electronically entered by said subject or user (100) on an electronic user interface, and/or
- at least the characteristic electronic data (14d) of said primary file (14) can be read exclusively by said subject or user (100) after an electronic introduction and verification of access credentials electronically entered by said subject or user (100) on an electronic user interface, or by said verification data processing unit (412), and/or
- said financial or banking institute (20) does not have access to said characteristic electronic data (14d).

According to a further non-limiting aspect, said characteristic (2) extends on a substantially planar portion of the element (1).

According to a further non-limiting aspect, said characteristic (2) extends on a substantially non-planar portion of the element (1).

According to a further non-limiting aspect, said step of electronic acquisition is a step of scanning, and/or said acquisition device (11) comprises at least one among the following devices: a camera, a file receiver, a roughness or weight identifier.

According to a further non-limiting aspect, said step of scanning is a two-dimensional scan or is a three-dimensional scan, and said camera is a two-dimensional or three-dimensional camera.

According to a further non-limiting aspect, said camera is a camera operating in the visible and/or infrared and/or ultraviolet spectrum.

According to a further non-limiting aspect, said characteristic electronic data (14d) are image data.

According to a further non-limiting aspect, the method comprises a step of definition of at least a customized payment condition, preferably comprising a step of definition of a plurality of customized payment conditions.

According to a further non-limiting aspect, said at least a customized payment condition is a customized payment condition defined by the user, and is in use defined by the subject or user (100).

According to a further non-limiting aspect, said at least a payment condition comprises at least one among:
- a temporal validity of said element (1) as payment element;
- an electronic association to an electronic verification code sent by said banking or financing institute (20) associated to said payment or financial instrument (21, 22) to an electronic device (101) associated to said subject or user (100), said electronic verification code acting as a means of confirmation to an execution of the payment;

- an electronic association to a further element (1) a characteristic (2) thereof has been associated to a primary file (14), preferably through the steps described in the method according to one or more of the aspects here described;
- a payment limitation as a function of a geographical position of said element (1) and/or of a merchandise category (MCC) associated to a payment.

According to a further non-limiting aspect, said economic availability (20c) associated to said payment or financial instrument (21, 22) is equal to or lower than an overall economic availability (20i) of said payment or financial instrument (21, 22).

According to a further non-limiting aspect, said payment or financial instrument (21, 22) comprises at least one between a bank account containing money in real or virtual currency, a e-wallet, a payment card.

According to a further non-limiting aspect, said payment card is a debit card and/or a credit card and/or a prepaid card.

According to a further non-limiting aspect, said overall economic availability (20i) is operatively and at least temporarily associated to said payment or financial instrument (21, 22).

According to a further non-limiting aspect, said overall economic availability (20i) acts as plafond for said payment or financial instrument (21, 22).

According to a further non-limiting aspect, said payment limitation as a function of a merchandise category (MCC) associated to a payment is stored in said primary file (14) as an authorization list to an arrangement of payment, or is stored in said primary file (14) as an exclusion list suitable for determining an electronic denial of said payment.

According to a further non-limiting aspect, the method comprises electronically determining said geographical position on the basis of a position assumed by a further acquisition device (411) and/or by a further verification data processing unit (412) operatively connected to said acquisition device (411) with which the at least a characteristic (2) of the element (1) is electronically acquired by comparison as a result of the memorization of said primary file (14).

According to a further non-limiting aspect, said step of definition occurs through said data processing unit (12).

According to a further non-limiting aspect, the method comprises a step of provision of an electronic user interface, said step of provision being destined to allow, in particular said subject or user (100), to set, adapt or delete said at least a customized payment condition.

According to a further non-limiting aspect, said method comprises, in alternative or in combination, a step of cancellation of said comparison file (414), automatically performed after said arrangement of said payment and/or after a step of execution of an electronic payment through said payment or financial instrument (21, 22).

According to a further non-limiting aspect, the method comprises a step of storage of said at least a customized payment condition as additional data (14a; 14k, 14s, 14c, 14e) in said primary file (14) or as associated data (20k, 20s, 20e, 20c) of a payment file (20f) stored in a memory of said financial or banking institute (20).

According to a further non-limiting aspect, the method comprises a step of definition of a minimum threshold (Th) of similarity between the characteristic electronic data (14d), univocally identifying said at least a characteristic (2) of said element (1) and stored in said primary file (14) and the characteristic electronic data univocally identifying said at least a characteristic (2) of said comparison element (1) and stored in said comparison file (414).

According to a further non-limiting aspect, said minimum threshold (Th) when exceeded, is destined to determine and/or force a logical identity between the characteristic electronic data stored in said comparison file (414) and the characteristic electronic data stored in said primary file (14) and to authorize an arrangement of an electronic payment through said payment or financial instrument (21, 22).

According to a further non-limiting aspect, said step of definition of said minimum threshold (Th) occurs by means of said data processing unit (12) and/or by means of said electronic user interface.

According to a further non-limiting aspect, the method comprises a step of modification of said element (1) comprising bringing to said element (1) said characteristic (2) by adapting a structural or physical characteristic thereof.

According to a further non-limiting aspect, the method comprises selecting a casual and optionally non-repeatable characteristic or a casual and optionally non-repeatable characteristic defined in a predefined characteristics pattern.

According to a further non-limiting aspect, the method comprises:
a step of electronic acquisition (1001) of at least a characteristic (2) of a real or virtual comparison element (1') owned by, and/or or associated to, a subject or user (100), through an acquisition device (411), preferably wherein said characteristic (2) is suitable for and/or destined to, and/or configured to, allow a univocal identification of said comparison element (1').

According to a further non-limiting aspect, the method comprises:
a step of electronic generation (1002) of a comparison file (414) containing at least characteristic electronic data univocally identifying said at least a characteristic (2) of said comparison element (1') and a step of storage of said file (414) in a memory (415).

According to a further non-limiting aspect, the method comprises:
a step of electronic access to a data processing unit (12) operatively associated to aa memory (15) upon which is stored a primary file (14) generated in accordance to the method according to one or more of the aspects here described.

According to a further non-limiting aspect, the method comprises:
a step of electronic comparison (1003, 1004), temporally following said step of electronic access, said step of electronic comparison (1003, 1004) comprising an electronic comparison between at least the comparison file (414) and said primary file (14).

According to a further non-limiting aspect, if from said step of electronic comparison results that said comparison file (414) and said primary file (14) contain characteristic electronic data univocally identifying said characteristic (2) identical or having greater similarity with respect to a predetermined minimum threshold (Th) of similarity (1005), there is an arrangement (1009) of an electronic payment through said payment or financial instrument (21, 22).

According to a further non-limiting aspect, otherwise, there is an electronic denial (1010) to said electronic payment.

According to a further non-limiting aspect, if from said step of electronic comparison results that said comparison file (414) and said primary file (14) contain characteristic electronic data identifying said at least a characteristic (2) identical or having greater similarity with respect to a predetermined minimum threshold (Th) of similarity (1005), the method comprises:
- operatively connecting said acquisition device (411) with said financial or banking institute (20) and/or with said payment or financial instrument (21, 22) for accessing a payment file (20f) and/or said memory (15) for receiving said primary file (14).

According to a further non-limiting aspect, if from said step of electronic comparison results that said comparison file (414) and said primary file (14) contain characteristic electronic data identifying said at least a characteristic (2) identical or having greater similarity with respect to a predetermined minimum threshold (Th) of similarity (1005), the method comprises:
- receiving an economic availability (14c, 20c) associated to said payment or financial instrument (21, 22) from said payment file (20f) and/or from said primary file (14).

According to a further non-limiting aspect, said step of electronic comparison (1003, 1004) is performed by a verification data processing unit (412) operatively, optionally operatively and directly, connected to the acquisition device (411) or is performed by a computerized comparison system, electronically activated by said verification data processing unit (412) and remote and distinct with respect to said verification data processing unit (412).

According to a further non-limiting aspect, said primary file (14) is a limited access file, preferably limited to said subject or user (100), in particular wherein:
- at least the characteristic electronic data (14d) of said primary file (14) can be altered exclusively by said subject or user (100) after an electronic introduction and verification of access credentials electronically entered by said subject or user (100) on an electronic user interface, and/or
- at least the characteristic electronic data (14d) of said primary file (14) can be read exclusively by said subject or user (100) after an electronic introduction and verification of access credentials electronically entered by said subject or user (100) on an electronic user interface, or by said verification data processing unit (412), and/or by said computerized comparison system, and/or
- said financial or banking institute (20) has not access to said characteristic electronic data (14d).

According to a further non-limiting aspect, if from said step of electronic comparison results that said comparison file (414) and said primary file (14) contain characteristic electronic data (14d) identifying said at least a characteristic (2) identical or having greater similarity with respect to a predetermined minimum threshold (Th) of similarity (1005), the method comprises:
- electronically verifying, preferably by said primary file (14) or by the payment file (20f) stored in the memory of said financial or banking institute (20), the presence of at least an additional payment condition, and if said at least an additional payment condition is present.

According to a further non-limiting aspect, if from said step of electronic comparison results that said comparison file (414) and said primary file (14) contain characteristic electronic data (14d) identifying said at least a characteristic (2) identical or having greater similarity with respect to a predetermined minimum threshold (Th) of similarity (1005), the method comprises
- electronically verifying if said at least an additional payment condition is met.

According to a further non-limiting aspect, verifying if said at least an additional payment condition is met comprises at least one among the following actions:
- electronically verifying a temporal validity of said element (1) as payment element, preferably comparing a current data and/or time with a stored date and/or time of validity cessation (14e) stored in said primary file (14) or in said payment file (20f);
- electronically verifying, through a verification data processing unit (412) operatively associated to an acquisition device (411), the coherence and/or identity of an electronic verification code sent by said banking or financing institute (20) associated to said payment or financial instrument (21, 22) to an electronic device (101) associated to said subject or user (100) with a code electronically introduced in said verification data processing unit (412);
- electronically verifying, through a verification data processing unit (412) operatively associated to an acquisition device (411), a correct identification of at least a further element (1) a characteristic (2) thereof has been associated to a primary file (14), preferably through the steps described in one or more of the aspects here described;
- electronically verifying, by means of a verification data processing unit (412) operatively associated to an acquisition device (411), a coherence or identity between a position currently held by said element (1) with a geographical position of authorization, stored in said primary file (14) or in said payment file (20f).

According to a further non-limiting aspect, verifying if said at least an additional payment condition is met comprises proceeding with said step of arrangement of said transaction (1009) only when the electronic verification gives a positive result.

According to the present disclosure it is described a method of authorization of a payment.

According to a further non-limiting aspect, the method of authorization of a payment comprises:
- a step of electronic definition (2001) of a payment amount (P), equal to or lower than said economic availability (20c) associated to said payment or financial instrument (21, 22).

According to a further non-limiting aspect, the method of authorization of a payment comprises:
- a step of execution of said payment (2003), comprising an electronic reduction of said economic availability (20c) associated to said payment or financial instrument (21, 22), for an amount corresponding to said payment amount (P).

According to a further non-limiting aspect, the method of authorization of a payment comprises an electronic comparison (2002) between said payment amount (P) and said economic availability (20c) associated to said payment or financial instrument (21, 22) or an electronic comparison (2002) between said payment amount (P) and an overall economic availability (20i) of said payment or financial instrument (21, 22), an execution of said payment (2003) only occurring when, following said electronic comparison (2002), results that said payment amount (P) is lower than or equal to said economic availability (20c) or a said overall economic availability (20i).

According to the present disclosure it is described a distributed computing environment for the electronic association among elements and payment systems, comprising:
- a data processing unit (12), operatively connected to an acquisition device (11) and configured to receiving from said acquisition device (11) characteristic electronic data (14d), univocally identifying at least a characteristic (2) of an element (1), real or virtual, and owned or associated to a subject or user (100), and wherein said characteristic (2) is electronically acquired through the acquisition device (11), preferably wherein said characteristic is destined to allow the univocal identification of said element (1);
wherein
said data processing unit (12) is configured to generate at least a primary file (14) containing said characteristic electronic data (14d) and to store said primary file (14) in a memory (15);
the distributed computing environment being configured to perform an electronic association of said primary file (14) to at least a payment or financial instrument (21, 22), preferably associated to a financial or banking institute (20), preferably said payment or financial instrument (21, 22) being owned by, and/or selectively assigned to, said subject or user (100);
the distributed computing environment being configured to univocally assign, preferably as a result of said electronic association, and/or subsequently to said electronic association, an economic availability (14c, 20c) to said primary file (14), wherein said economic availability (20c) is associated to said payment or financial instrument (21, 22),
the distributed computing environment is configured to provide an electronic access, preferably to a remote verification data processing unit (412), to perform an electronic search, on said memory (15), of at least said primary file (14), through an electronic comparison between at least a comparison file (414) containing characteristic electronic data (14d) identifying at least a characteristic of a comparison element (1) and said primary file (14).

According to a further non-limiting aspect, said element (1) is a pre-existing, optionally natural element.

According to a further non-limiting aspect, said element (1) is a not realized element, preferably not realized in a substantially integral way, to make at least the electronic acquisition of said at least a characteristic (2) of the element (1), preferably through said acquisition device (11).

According to a further non-limiting aspect, the electronic association and the assignment of said economic availability make said element (1) become a payment instrument, preferably a subordinate payment instrument.

According to a further non-limiting aspect, the data processing unit (12), or a data processing unit of said financial or banking institute (20), part of said distributed computing environment, is configured to electronically access said primary file (14) to at least a payment or financial instrument (21, 22) associated to a financial or banking institute (20), preferably said payment or financial instrument (21, 22) being owned by, and/or electively assigned to, said subject or user (100).

According to a further non-limiting aspect, the data processing unit (12), or a data processing unit of said financial or banking institute (20), part of said distributed computing environment, is configured to univocally assign said economic availability (20c) a said primary file (14).

According to a further non-limiting aspect, said characteristic (2) is a univocal characteristic of said element (1) or is a characteristic destined to allow a univocal identification of said element (1),
and/or said characteristic (2) is a characteristic physical and/or intrinsic and/or naturally present on said element (1) or is a characteristic (2) artificially brought on said element (1) and/or is a visible characteristic of said element (1) or is a hidden characteristic (2) of said element (1).

According to a further non-limiting aspect, said characteristic (2) differs from an alphanumerical code and/or differs from a known visual code, and/or is a characteristic (2) representable by means of an image.

According to a further non-limiting aspect, said element (1) is different from an element traditionally used for a payment, preferably is different from an element traditionally used for an electronic payment, and/or wherein said element (1) is not a payment card, and/or is not a banknote, and/or is not a bank account.

According to a further non-limiting aspect, the distributed computing environment comprises said acquisition device (11).

According to a further non-limiting aspect, said acquisition device (11) comprises at least one among the following devices: a camera, un file receiver, un roughness or weight identifier.

According to a further non-limiting aspect, said acquisition device (11) is configured to perform a two-dimensional scan or a three-dimensional scan.

According to a further non-limiting aspect, said camera is a two-dimensional or three-dimensional camera.

According to a further non-limiting aspect, said camera is a camera operating in the visible and/or infrared and/or ultraviolet spectrum.

According to a further non-limiting aspect, said distributed computing environment is configured to allow to electronically define a customized payment condition, preferably being configured to allow to electronically define a plurality of customized payment conditions.

According to a further non-limiting aspect, said at least a customized payment condition is a customized payment condition defined by the user, and is in use defined by the subject or user (100).

According to a further non-limiting aspect, said at least a payment condition comprises at least one among:
- a temporal validity of said element (1) as payment element;
- an electronic association to an electronic verification code sent by said banking or financing institute (20) associated to said payment or financial instrument (21, 22) to an electronic device (101) associated to said subject or user (100), said electronic verification code acting as a means of confirmation to an execution of the payment;
- an electronic association to a further element (1) a characteristic (2) thereof has been associated to a primary file (14), preferably by means of the steps described in one or more of the herewith disclosed aspects or by means of the computing environment according to one or more of the herewith disclosed aspects;
- a payment limitation as a function of a geographical position of said element (1) and/or of a merchandise category (MCC) associated to a payment;
preferably wherein said economic availability (20c) associated to said payment or financial instrument (21, 22) is equal to or lower than an overall economic availability (20i) of said payment or financial instrument (21, 22).

According to a further non-limiting aspect, said economic availability (14c, 20c) is in the form of a data list of economic availability, wherein each data comprises:
- a value of economic availability, in particular a numerical value of economic availability associated to a metadata indicative of a currency of said numerical value,
- a respective customized payment condition.

According to a further non-limiting aspect, said geographical position is electronically determined on the basis of a position assumed by a further acquisition device (411) and/or by a further verification data processing unit (412) operatively connected to said acquisition device (411) with which the at least a characteristic (2) of the element (1) is electronically acquired by comparison as a result of the storage of said primary file (14).

According to a further non-limiting aspect, in said distributed computing environment, said data processing unit (12) is configured to allow to define said at least a customized payment condition.

According to a further non-limiting aspect, the distributed computing environment comprises an electronic user interface configured to allow, in particular said subject or user (100), to set, adapt or delete said at least a customized payment condition.

According to a further non-limiting aspect, in alternative or in combination, said distributed computing environment is configured to automatically perform a deletion of said comparison file (414) after said arrangement of said payment and/or after a step of execution of an electronic payment through said payment or financial instrument (21, 22).

According to a further non-limiting aspect, the distributed computing environment is configured to store said at least a customized payment condition as additional data (14a; 14k, 14s, 14c, 14e) in said primary file (14) or as associated data (20k, 20s, 20e, 20c) of a payment file (20f) stored in a memory of said financial or banking institute (20).

According to a further non-limiting aspect, said computing environment is configured to allow to define a minimum threshold (Th) of similarity between the characteristic electronic data (14d) univocally identifying said at least a characteristic (2) of said element (1) in said primary file (14) and the characteristic electronic data (14d) univocally identifying said at least a characteristic (2) of said comparison element (1) in said comparison file (414).

According to a further non-limiting aspect, said minimum threshold (Th) when exceeded, is destined to determine and/or force a logical identity between the characteristic electronic data (14d) stored in said comparison file (414) and the characteristic electronic data (14d) stored in said primary file (14) and to authorize an arrangement of an electronic payment through said payment or financial instrument (21, 22).

According to a further non-limiting aspect, in said distributed computing environment, is said data processing unit (12) and/or said electronic user interface, is configured to allow to define said minimum threshold (Th).

According to a further non-limiting aspect, said element (1) is modified by bringing a said element (1) said characteristic (2) that adapts a structural or physical characteristic thereof, and is modified starting from a casual and optionally non-repeatable characteristic or a casual and optionally non-repeatable characteristic defined in un predefined characteristics pattern selected as said characteristic (2).

According to the present disclosure it is described a secondary distributed computing environment, to authorize a payment, comprising:
- a verification data processing unit (412), operatively connected to an acquisition device (411) and configured to receive from said acquisition device (411) characteristic electronic data (14d) univocally identifying at least a characteristic (2) of a real or virtual comparison element (1') and owned or associated to a subject or user (100), and wherein said characteristic (2) is electronically acquired through the acquisition device (11), preferably wherein said characteristic is destined to allow the univocal identification of said comparison element (1').

According to a further non-limiting aspect, said verification data processing unit (412) is configured to generate at least a comparison file (414) containing said characteristic electronic data (14d) and to store said comparison file (414) in a memory (415).

According to a further non-limiting aspect, the secondary distributed computing environment is configured to electronically access to a data processing unit (12) operatively associated to a memory (15) upon which it is stored a primary file (14) generated through the computing environment according to one or more of the aspects here described.

According to a further non-limiting aspect, the secondary distributed computing environment is configured to perform, in a time following the electronic access to the data processing unit (12), an electronic comparison (1003, 1004) between said comparison file (414) and said primary file (14).

According to a further non-limiting aspect, if from said electronic comparison results that said comparison file (414) and said primary file (14) contain characteristic electronic data (14d) identifying said at least a characteristic identical or having greater similarity with respect to a predetermined minimum threshold (Th) of similarity (1005), there is an arrangement (1009) of an electronic payment through said payment or financial instrument (21, 22).

According to a further non-limiting aspect, otherwise, there is an electronic denial (1010) to said electronic payment.

According to a further non-limiting aspect, said secondary distributed computing environment is configured to make said electronic comparison be performed by said verification data processing unit (412) operatively, optionally operatively and directly, connected to the acquisition device (411) or a computerized comparison system, electronically activated by said verification data processing unit (412) and remote and distinct with respect to said verification data processing unit (412).

According to a further non-limiting aspect, said primary file (14) is a limited access file, preferably limited to said subject or user (100).

According to a further non-limiting aspect, in particular:
- at least the characteristic electronic data (14d) of said primary file (14) can be altered exclusively by said subject or user (100) after an electronic introduction and verification of access credentials electronically entered by said subject or user (100) on an electronic user interface, and/or
- at least the characteristic electronic data (14d) of said primary file (14) can be read exclusively by said subject or user (100) after an electronic introduction and verification of access credentials electronically entered by said subject or user (100) on an electronic user interface, or by said verification data processing unit (412), and/or by said computerized comparison system, and/or
- said financial or banking institute (20) has no access to said characteristic electronic data (14d).

According to a further non-limiting aspect, if from said electronic comparison results that said comparison file (414) and said primary file (14) contain characteristic electronic data (14d) identical or having greater similarity with respect to a predetermined minimum threshold (Th) of similarity (1005), the secondary distributed computing environment is configured to:
- operatively connecting said acquisition device (411) with said financial or banking institute (20) and/or with said payment or financial instrument (21, 22) for accessing said payment file (20f) and/or with a memory (15) containing said primary file (14) for accessing said primary file (14).

According to a further non-limiting aspect, if from said electronic comparison results that said comparison file (414) and said primary file (14) contain characteristic electronic data (14d) identical or having greater similarity with respect to a predetermined minimum threshold (Th) of similarity (1005), the secondary distributed computing environment is configured to:
- receiving an economic availability (14c, 20c) associated to said payment or financial instrument (21, 22) from said payment file (20c) and/or from said primary file (14).

According to a further non-limiting aspect, if from said electronic comparison results that said comparison file (414) and said primary file (14) contain characteristic electronic data (14d) identical or having greater similarity with respect to a predetermined minimum threshold (Th) of similarity (1005), the secondary distributed computing environment is configured to:
- electronically verifying, preferably by said primary file (14) or by the payment file (20f) stored in the memory of said financial or banking institute (20), the presence of at least an additional payment condition, and if said at least an additional payment condition is present.

According to a further non-limiting aspect, if from said electronic comparison results that said comparison file (414) and said primary file (14) contain characteristic electronic data (14d) identical or having greater similarity with respect to a predetermined minimum threshold (Th) of similarity (1005), the secondary distributed computing environment is configured to:
- electronically verifying if said at least an additional payment condition is met.

According to a further non-limiting aspect, verifying if said at least an additional payment condition is met comprises at least one among the following actions:
- electronically verifying a temporal validity of said element (1) as payment element, preferably comparing a current data and/or time with a stored date and/or time of validity cessation (14e) stored in said primary file (14) or in said payment file (20f);
- electronically verifying, through a verification data processing unit (412) operatively associated to an acquisition device (411), the coherence and/or identity of an electronic verification code sent by said banking or financing institute (20) associated to said payment or financial instrument (21, 22) to an electronic device (101) associated to said subject or user (100) with a code electronically introduced in said verification data processing unit (412);
- electronically verifying, through a verification data processing unit (412) operatively associated to an acquisition device (411), a correct identification of at least a further element (1) a characteristic (2) thereof has been associated to a primary file (14), preferably by means of the steps described in one or more of the herewith disclosed aspects;
- electronically verifying, through a verification data processing unit (412) operatively associated to an acquisition device (411), a coherence or identity between a position currently held by said element (1) with a geographical position of authorization, stored in said primary file (14) or in said payment file (20f).

According to a further non-limiting aspect, verifying if said at least an additional payment condition is met comprises:
proceeding with said step of arrangement of said transaction (1009) only when the electronic verification gives a positive result.

According to the present disclosure it is also described a tertiary distributed computing environment, for the execution of a payment, comprising:
- a secondary distributed computing environment, according to one or more of the aspects here described.

According to a further non-limiting aspect, said tertiary distributed computing environment is configured to:
- electronically define (2001) a payment amount (P), equal to or lower than said economic availability (20c) associated to said payment or financial instrument (21, 22).

According to a further non-limiting aspect, said tertiary distributed computing environment is configured to:
- execute said payment (2003), electronically reducing said economic availability (14c, 20c) associated to said payment or financial instrument (21, 22), for an amount corresponding to said payment amount (P).

According to a further non-limiting aspect, said tertiary distributed computing environment is configured to perform an electronic comparison (2002) between said payment amount (P) and said economic availability (20c) associated to said payment or financial instrument (21, 22) or an electronic comparison (2002) between said payment amount (P) and an overall economic availability (20i) of said payment or financial instrument (21, 22), an execution of said payment (2003) only occurring when, following said electronic comparison (2002), results that said payment amount (P) is lower than or equal to said economic availability (20c) or a said overall economic availability (20i).

### Figures

The following detailed description refers to the attached figures, a brief description thereof is given below.
Figure 1 shows a principle scheme of a system of electronic association between objects and payment systems, wherein the object is a bottle, and wherein the payment instrument is a bank account.
Figure 2 shows a principle scheme of a system of electronic association between objects and payment systems, wherein the object is a banknote, and wherein the payment instrument is a payment card.
Figure 3 shows a first non-limiting embodiment of a file.
Figure 4 shows a second non-limiting embodiment of a file, comprising additional data.
Figure 5 shows un file associated to a banking file comprising additional data.
Figure 6 and figure 7 show, respectively, a first and a second example of additional data.
Figure 8 shows a principle scheme of a payment system based on the identification of a characteristic of an object.
Figure 9 shows a similitude threshold diagram for the authorization of the execution of a payment.
Figure 10 shows a flow chart of a method of arrangement of a payment.
Figure 11 shows a payment flow chart.

### Detailed description

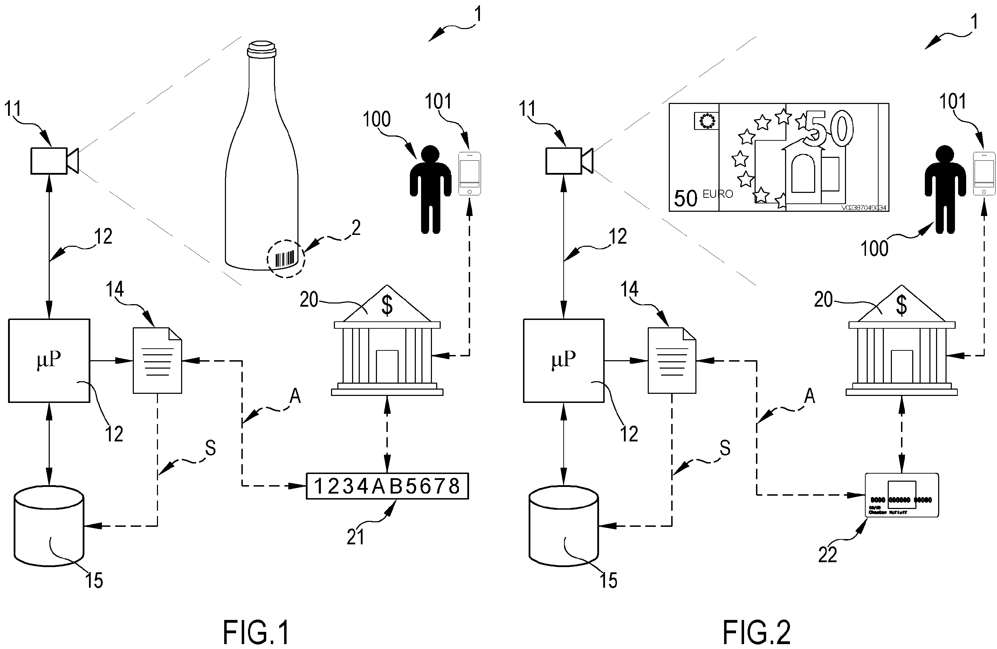

In figure 1 reference number 1 identifies a real or virtual element, which can be used by a subject or user 100 to make a payment, in order to purchase and/or exploit one or more goods or services.

The element 1 can for example be a real element, and in particular be for example any object, for example a bottle, a banknote, a fruit, a picture, a fork, a car.

The element 1 can also be a virtual element, for example an electronic image, a file.

Therefore, in a non-limiting embodiment, the element 1 is an element different with respect to elements commonly used as payment instruments; in such embodiment, the element 1 is different with respect to a banknote or a card resembling a credit card, or more generally a payment card (at least one between a credit card, debit card, prepaid card or their combinations).

In these embodiments, the element 1 is different from an object traditionally used and universally recognized as payment instrument. This technical characteristic makes it possible to increase the safety of arrangement and, subordinately, execution of a payment. In fact, there are areas wherein, for an owner, the possession of banknotes and payment cards exposes the owner himself to risk: areas that are very poor and/or characterized by widespread crime, or where by the nature or graphics of the banknote or payment card, or in relation to publicly known characteristics of the holder, it is known or can be assumed that the banknote or payment card is, or potentially is, of a great value. On the contrary, the element 1 of generic type is not traditionally associated to a great economic value, in particular if of common use: a cap, a pen, a key.

In some embodiments, the element 1 is a pre-existing element, and therefore is not created, in particular in an integral or even partial way, for the purposes of the present disclosure.

The element 1 is distinguished by its own characteristic 2. To this end, the characteristic 2 can be indicated as an own characteristic of the element 1, that is, originally or otherwise made on the element 1 in order to make it distinguished with respect to others.

The present invention is based on the fact that the Applicant has noted that many commonly used elements, although entirely similar to other elements, have detailed characteristics that make them unique, and these detailed characteristics, when appropriately electronically identified, can serve to make an electronic recognition system recognize such an object as a specific object between a plurality of similar objects, thereby being able to differentiate it to the point where it can be assigned an economic value because - electronically - such object has been associated to a payment or financial instrument.

Generalizing the concept, even an element represented by an image can be provided with a univocal characteristic. An electronic image, in particular when captured in a natural environment and/or depicting a subject, is unlikely to be identical to a similar image, even where such an image is intended to be replicated using the same subject in the same environment.

Therefore it appears clear that the characteristic 2 which is here described is a univocal characteristic, or is a characteristic destined to allow to distinguish in a univocal way the element 1 from similar elements.

In particular, where the element 1 is a real element, the characteristic 2 is a physical characteristic.

The characteristic 2 can be a characteristic naturally present on an element: an imperfection, a concavity, a convexity, a local variation of reflectivity in the visible and/or infrared and/or ultraviolet spectrum, a roundness, a surface roughness. The characteristic 2 can therefore be a pre-existing characteristic.

The characteristic 2 can be a characteristic that is artificially made to the element 1, through an outer action; in particular, that characteristic provides the alteration of the element 1 in order to personalize it, preferably with a surface alteration and/or of a mechanical or physical characteristic thereof, preferably not commonly recognizable as indicative of the univocity of the object.

In a non-limiting embodiment, however, the element 1 is not an element specifically made for the purposes of the present disclosure; this means that, in an embodiment, the element 1 is not made ex novo and/or integrally for the purposes intended by the present disclosure.

In an embodiment, in order to make the element 1 less distinguishable as a customized element and integrating a univocal characteristic suitable for making it a payment instrument, this characteristic 2 differs from an alphanumerical code or from a visual code of a known type.

The characteristic 2 can be representable through an image and can be for example a series of lines apparently arranged in a random order, optionally arranged and/or realized in a portion, or within the limits of a portion, predefined of the element 1.

For example, a bottle 1 can be subject to a step of customization wherein a plurality of notches is realized randomly on a portion of the surface of the bottle itself, and that portion of the surface varies from time to time depending on the bottle being considered.

These notches apparently follow a random arrangement criterion, but that is actually defined according to a predefined pattern or pattern of presentation. Within that predefined presentation scheme or pattern, the notches are actually randomly arranged, and/or are present in a random number.

For example, the predefined presentation scheme or pattern is as follows: the notches must be no more than 100 in number, and located in an overall area equal to 50x33mm and placed randomly on the lateral wall of the bottle, but not on the bottom nor on the cap or neck of the bottle.

The element 1 can be a key, traditionally used to open doors or flaps. Keys are traditionally known to have a univocal shape and/or surface characteristic. The univocal shape and/or surface characteristic are traditionally employed to allow the opening of a lock only by the specific key, and not by additional similar keys.

The aim is to use the univocal surface shape and/or characteristic of the key as a characteristic 2 to make the key an object with which, in addition to opening or closing a lock, it is possible to arrange, and finally perform, a payment.

In other embodiments, the element 1 is an element which is traditionally used as a payment instrument, and for example is a banknote or is a credit card itself. In such a case the banknote or the credit card are not used to pay in relation to their nominal value or to the monetary amount which is inferable from their traditional data, but are used by attributing to them a value, here named arbitrary value, which is function of different characteristics 2, for example micro asperities or printing inaccuracies (this especially applies to banknotes) which, in particular if identified with respect to the serial number (banknotes) or the card number (payment cards) allow to differentiate, for example a $1 banknote with respect to a similar 1$ banknote.

The method which is described hereinafter comprises a step of assignment of an economic availability.

The step of assignment of said economic availability is preferably the result of a step of association better described below. In an embodiment the step of assignment of said economic availability occurs at a time instant temporally subsequent to the step of association better described below.

The step of assignment, which in particular is a step of electronic assignment, comprises associating, to a primary file 14 which contains characteristic electronic data 14d, identifying at least the characteristic 2 of the element 1, an economic availability 14c, 20c which is associated to and determined by a payment or financial instrument 21, 22 which in a non-limiting embodiment is selectively associated to the subject or user 100 who holds or represents the element 1 or, alternatively, is owned by said subject or user 100.

The payment or financial instrument 21, 22 is owned or is managed by or is provided by a banking or financing institute 20.

The characteristic electronic data 14d contained in the primary file 14 are data of a highly confidential nature, because they are the ones that make it possible to recognize the specific element 1 to which they correspond. For this reason the primary file 14 is a file whose access is limited, and is in particular limited to the subject or user 100, and - as it will be better described below, and only in some embodiments to an additional data processing unit or data processing system.

In particular, the primary file 14 when created is accessible only by the data processing unit 12 or by an additional data processing unit upon introduction and verification of access credentials electronically introduced by the subject or user 100 on an electronic user interface managed by said data processing unit 12. The data processing unit 12 can take care of electronically verifying the identity of the subject or user 100 comparing the credentials entered by the latter with access credentials stored in the primary file 14.

In an embodiment, in particular, at least the characteristic electronic data 14d of the primary file 14 are not accessible to banking or financing institute 20.

In an embodiment, therefore, exist the following conditions:
- at least the characteristic electronic data 14d of said primary file 14 can be altered exclusively by said subject or user 100 after an electronic introduction and verification of access credentials electronically entered by said subject or user 100 on an electronic user interface, and/or
- at least the characteristic electronic data 14d of said primary file 14 can be read exclusively by said subject or user 100 after an electronic introduction and verification of access credentials electronically entered by said subject or user 100 on an electronic user interface, or by said verification data processing unit 412, and/or
- said financial or banking institute 20 has not access to said characteristic electronic data 14d.

In the method that is implemented through the distributed computing environment here described, the element 1 becomes a payment instrument, in particular a subordinate payment instrument. "subordinate" is here used since the element 1 is linked, with a pre-existing payment instrument, and depends on it at least in terms of the maximum payable amount. In particular, the step of assignment of an economic availability and the step of association are the ones that strictly speaking allow said element 1 to become an actual payment instrument.

It can thus be considered that the payment or financial instrument 21, 22 here described can be considered a primary payment instrument, while the element 1 becomes a subordinate payment instrument; such subordinate payment instrument is in particular operatively associated, and preferably univocally associated, with a specific payment or financial instrument 21, 22. The univocal association, which is not to be intended as limiting, is nonetheless advantageous. Indeed, such univocal association allows to avoid having to choose which, between a plurality of payment or financial instruments 21, 22 theoretically associable to the element 1 in the way here described, having to select.

It is however possible that according to the specific commercial service or product with which the payment is made, the system here described identifies, for example by reason of the name of the seller/service provider, in a for example automatic way, one among a plurality of payment or financial instruments 21, 22 associated to the element 1. It is thus clear that the electronic association between the primary file 14 and at least a payment or financial instrument 21, 22 can be in particular an electronic association between the primary file 14 and a plurality of payment or financial instruments 21, 22.

The "identifying electronic data" are properly so-called to distinguish them from the generic electronic data that are part of a file. The identifying electronic data represent a part of the electronic data that compose as a whole the file.

The payment 22 or financial instrument 21 can be one among: a bank account containing money in real or virtual (for example, bitcoin) currency, an e-wallet, a payment card, in particular a debit card and/or a credit card and/or a prepaid card. To the payment instrument is operatively and at least temporarily associated an overall economic availability, which can be withdrawn at any time from an authorized subject.

There is no need to create a new payment structure, because in fact, the element 1 with its at least a characteristic 2 suitable for univocally distinguishing it, becomes logically associated to a well-defined, proven and pre-existing payment or financial instrument 21, 22.

The safety of the method here described is given and is a function of a reliability in recognizing the characteristic 2 as univocal characteristic identifying the element 1 from similar elements, both when the element 1 is first identified and when - later - that element 1 is used by a subject or user 100 in any place of payment configured to (for example, having electronic devices properly configured to) precisely identify the element 1 and said characteristic 2.

In this regard an acquisition device 11 is destined to detect said characteristic 2.

The acquisition device 11 is part of a distributed computing environment which is here described as "distributed" since it should not be intended that the computing capability of the data processing units here included is defined and limited to a single location.

In the present disclosure the data processing units can be processors of general-purpose type, or dedicated processors and/or can include dedicated circuits (e.g., ASICs) or FPGAs appropriately programmed and/or configured.

In a preferred but non-limiting embodiment, the acquisition device 11 is a camera, for example a camera configured to capture images in the visible and/or infrared and/or ultraviolet spectrum.

In an embodiment said camera is a three-dimensional camera.

Where the element 1 is a virtual image, for example the acquisition device 11 will be a file receiver; this acquisition device 11 can also be a roughness or weight identifier.

In an embodiment, the acquisition device 11 can be a two-dimensional camera. In an alternative embodiment, the acquisition device 11 can be a three-dimensional camera; la three-dimensional camera is destined to capture a three-dimensional image of the element 1. This technical characteristic is particularly useful where the characteristic 2 is not arranged on a planar surface.

Regardless of whether the camera is two-dimensional or three-dimensional, this camera can shoot scenes in the domain of visible, infrared, ultraviolet or in a combined domain of the two or three mentioned above.

The acquisition device 11 is operatively connected with a data processing unit 12 of the distributed computing environment, and in turn this data processing unit 12 is operatively connected with a memory 15 in which is stored the primary file 14.

The distributed computing environment here described is in particular configured to perform, in use, a step of association. This step of association comprises an electronic association (arrow A) between said primary file 14 and at least a payment or financial instrument 21, 22 associated to a financial or banking institute 20. As already previously mentioned, in a non-limiting embodiment the payment or financial instrument 21, 22 is selectively assigned to the subject or user 100 who holds or represents the element 1: this means that the holder or owner of the payment or financial instrument 21, 22 can be different from the holder of the element 1; it is for example possible that the payment instrument, in the form of a credit card, is owned by a parent, and that the element 1 is owned by a son.

The distributed computing environment here described is configured to assign an economic availability; this assignment is the result of the step of association previously mentioned.

The assignment of an economic availability comprises univocally assigning to the primary file 14 an economic availability 20c associated to said payment or financial instrument 21, 22. For example:
- to the primary file 14 can be assigned an economic availability of 350 €, associated to a prepaid card the credit of which is of 350€;
- to the primary file 14 can be assigned an economic availability of 450 €, associated to a bank account the amount of which is equal to 32450 €.

Throughout the present description, reference will be made to:
- overall economic availability 20i: is the maximum economic availability present on the payment or financial instrument 21, 22, and therefore represents the maximum amount withdrawable from the latter;
- price P of an object or service you want to buy through the element 1.

The overall economic availability 20i can then represent a plafond for the payment or financial instrument 21, 22.

The element 1 can be destined to be worth, rigidly, the amount corresponding to the economic availability 20c, or - alternatively - can be destined to be worth a price that is lower than or equal to the economic availability 20c.

In an embodiment, the overall economic availability 20i also represents the maximum economic availability 20c that can be associated to the element 1 through the primary file 14.

The computing environment here described is also destined to allow the realization of an electronic access to a search, carried out on the memory 15, of the primary file 14 through an electronic comparison between at least a comparison file 414 and the primary file 14.

As it will be clear from the description below the comparison file 414 contains characteristic electronic data identifying at least a characteristic of a comparison element 1'.

In other words, following the acquisition of the characteristic 2, the object 1 can be used in a different environment and through a further acquisition device 411 the characteristic 2 thereof can be correctly acquired, and when electronically it is verified that the scanned object 1 is indeed the object 1, and not a similar object, a payment can be arranged and subsequently the payment itself can be made, purchasing an object 400, for example a car, the fixed price of which is the price P. In the present description reference is made to a comparison object 1' since there is the assumption wherein the object scanned by the further acquisition device 411 is only very similar, but is not, the object 1.

Depending on how it can be configured the distributed computing environment here described, the association is performed or made possible by the data processing unit 12 operatively connected to the acquisition device 11, or by a data processing unit of the financial or banking institute 20.

Equally, depending on how it can be configured the distributed computing environment here described, the assignment of the economic availability is performed or made possible by the data processing unit 12 or by the data processing unit of said financial or banking institute 20.

It is also noted that throughout the present description reference will be made to a verification data processing unit 412 of a system that is used to scan the element 1 following the acquisition of the characteristic 2. The distinction between the data processing unit 12 and the verification data processing unit 412 is provided only for the purposes of improving the intelligibility of the present description, since it is allowable that the first scan of the element 1 aimed at detecting for the first time the characteristic 2 and the subsequent scan that is performed to make the payment of the object 400, are carried out on two systems between them different although part of the same distributed computing environment.

It is however envisaged that the system on which the first scan and the second scan is performed is the same.

The computing environment here described is configured to allow to electronically define a customized payment condition, and preferably is configured to allow to electronically define a plurality of customized payment conditions.

The at least a customized payment condition is defined by the subject or user 100. Thanks to this technical characteristic, the subject or user 100 can decide, within certain limits, how much value to assign to the element 1 or how long to make it worth, or where to make it worth. The customization performed by the subject or user 100 differs sensibly with respect to the situation with traditional payment instruments: the banknote is worth, rigidly, the value stamped on it; the payment limits of the payment card are imposed and controlled, many times rigidly especially in terms of the payment maximum, by the banking or financing institute.

A first customized payment condition is given by a temporal validity of the element 1 as payment element. For example, the subject or user 100, through the user interface and through the data processing unit 12 can impose that the payment through the element 1 can only be made within 1 week from the current date, or only by day, for example between 12h and 14h.

The temporal validity of the element 1 as payment element can then be, for example:
- defined up to a maximum date or hour limit;
- be cyclically repeatable at predefined date or hour intervals.

A second customized payment condition is an electronic association to an electronic verification code sent by said banking or financing institute 20 associated to said payment or financial instrument 21, 22 to an electronic device 101 associated to said subject or user 100.

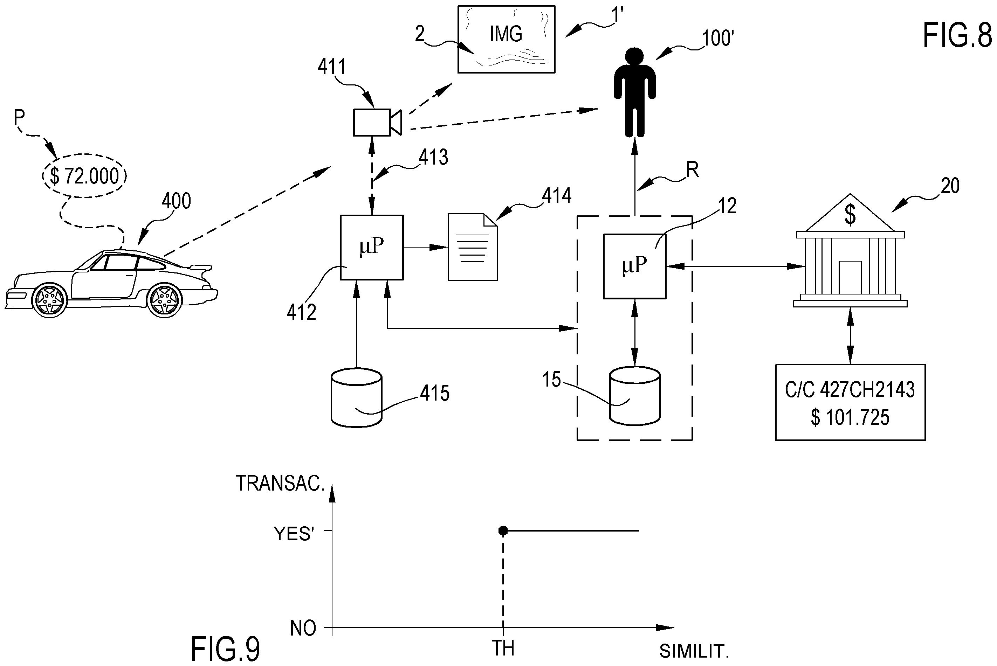

In use, when the subject or user 100 tries to perform a payment with the element 1, the verification data processing unit 412 (see figure 8) of the commercial business in which the element 400 to be purchased is arranged (figure 8 schematically represents a car) contacts electronically the data processing unit of the banking or financing institute 20.

Optionally on the basis of the amount to be paid, the banking or financing institute 20 can decide to proceed with the transmission of a univocal code (which acts as an electronic verification code) towards the electronic device 101. The subject or user 100' who owns the electronic device 101 receives this univocal code and introduces it electronically so that it can be received by the verification data processing unit 412, and by the latter transmitted back toward the data processing unit of the financial banking institution 20.

If the electronic comparison automatically performed between the univocal code sent toward the electronic device 101 and the code entered by the subject or user 100' shows identity, the arrangement and/or execution of the payment is proceeded with. Otherwise, the payment is denied.

Therefore, appears clear that the electronic verification code acts as a means of confirmation to an execution of the payment.

A third customized payment condition is represented by an electronic association between the element 1 and a further element 1 a characteristic 2 thereof has been associated to a primary file 14 through the steps described in the present document.

In use, when the subject or user 100 tries to perform a payment with the element 1 (first element 1), the verification data processing unit 412 (see figure 8) of the commercial business in which the element 400 to be purchased is arranged (figure 8 schematically represents a car) electronically requires that a further element 1 (second element 1) be scanned by the acquisition device 411 or by a similar device, so that a characteristic 2 thereof can be electronically detected.

When an acquisition device scans the further element 1, is generated a comparison file containing at least characteristic electronic data identifying said at least a characteristic 2 of the further element 1.

The comparison file is stored in a memory.

The memory operatively connected to the data processing unit 12 upon which is stored the primary file 14 is accessed.

It is verified if to the primary file 14 is associated an electronic data corresponding to the characteristics 2 identified on the further element 1: if so, it is proceeded with an arrangement to an electronic payment through the payment or financial instrument 21, 22. Otherwise, there is an electronic denial to said electronic payment. The above-mentioned verification is electronically carried out by the data processing unit 12.

It is noted that the element 1 and the further element 1 need not necessarily to be arranged in the same physical location; in fact, they can also be arranged in locations remote from each other, as long as at least a data processing unit capable of electronically verifying the electronic association between the two elements eventually exists.

This further element 1 is not any, but is a specific further element 1; thus, only the electronic recognition of two specific elements 1, because of their characteristics, makes possible the arrangement of the payment and, subsequently, the execution of the payment.

A fourth customized payment condition comprises a payment limitation as a function of a geographical position of said element 1 and/or of a merchandise category (MCC) associated to a payment.

In an embodiment, the geographical position of said element 1 is electronically established by the geographical position of the verification data processing unit 412 associated to the acquisition device 411 wherein the user makes the payment. Although some embodiments can provide that the element 1 comprises technical devices as to allow a localization thereof, the present disclosure should not be limited thereto.

The Merchant Category Code (MCC), is a four-digit numerical code used in the payment card industry to classify and categorize the business activities. This code is assigned to businesses and merchants when opening a payment card acceptance account, as credit or debit cards.

The MCC plays an important role in the system of payment cards, as it helps to determine how transactions are processed. For example, when making a purchase with a payment card, the system uses the MCC code to identify the nature of the merchant. This helps the issuing banks and payment networks to decide how to process the transaction, whether to charge specific fees or whether to offer particular advantages to cardholders based on the type of business.

For example, the MCC 5411 is associated to " Supermarkets and grocery stores." When purchases are made at a supermarket and you pay with a payment card, the card issuer and the payment network know that it deals with a purchase of groceries.

In use the distributed computing environment here described, for example the verification data processing unit 412 associated to the acquisition device 411 wherein the user makes the payment, electronically verifies whether in the primary file 14 there are payment limitations to one or more specified MCCs; it then electronically compares the MCC of the business activity with the MCC possibly stored in the primary file 14. The authorization to the arrangement of the payment or the electronic denial are function of said comparison.

It is to be noted that the merchandise category settable in the primary file 14 as a customized payment condition can be part of an authorization list (positive list, closed list) or part of a denial list (negative list).

The customized payment condition, or if present the customized payment conditions, are stored as additional data 14a, 14k, 14s, 14c, 14e in said file or as associated data 20k, 20s, 20e, 20c of a payment file which is stored in a memory of the financial or banking institute 20.

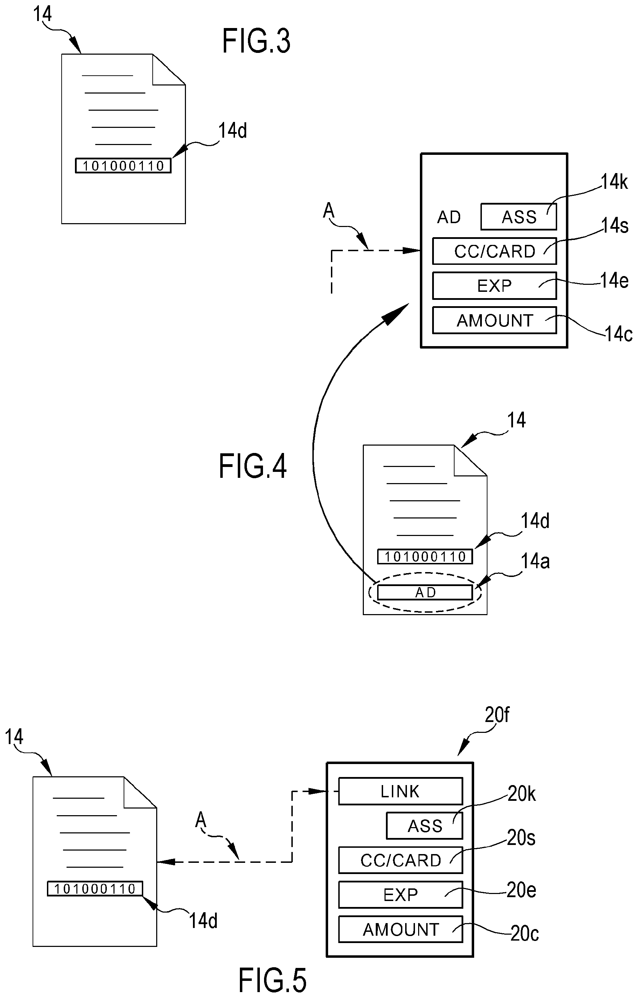

In particular, figure 3 shows an example of a primary file 14 containing the characteristic electronic data 14d identifying the characteristic 2 of the element 1 in a univocal way; in particular, the characteristic electronic data 14d' are destined to allow the overall identification of the element 1 together with its characteristic 2.

Figure 4 shows an example of a primary file 14 which contains additional data related to customized payment conditions.

The reference 14k indicates the electronic association to a further element 1 a characteristic 2 thereof has been previously associated to a further primary file 14, through the steps described in the present description.

The reference 14e indicates the temporal validity of said element 1 as payment element.

Furthermore:
- the reference 14c indicates the economic availability;
- the reference 14s indicates the data or the pointer to the data related to the payment or financial instrument 21, 22 to which the primary file 14 is associated.

Figure 5 shows an example of a primary file 14 that is associated to a payment file 20f which is stored at the banking or financing institute 20. In this case, the data related to customized payment conditions are stored within the payment file 20f.

The reference 20k indicates the electronic association to a further element 1 a characteristic 2 thereof has been previously associated to a further primary file 14, through the steps described in the present description.

The reference 20e indicates the temporal validity of said element 1 as payment element.

Furthermore:
- the reference 20c indicates the economic availability;
- the reference 20s indicates the data or the pointer to the data related to the payment or financial instrument 21, 22 to which the payment file 20f is associated.

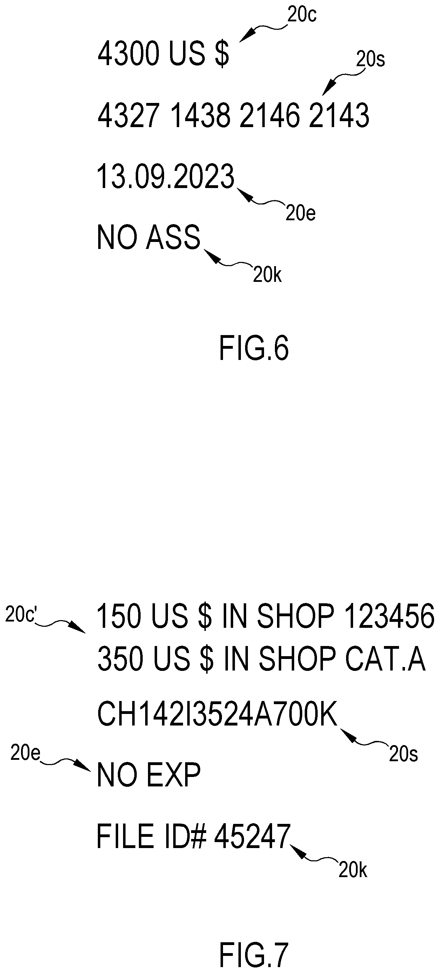

Figure 6 shows a non-limiting example of data that can be stored in a payment file 20f. These data can equally be stored in the primary file 14.

The economic availability 20c is equal to 4300 US$. The payment card which is operatively associated to the element 1, then to the payment file 20f, has the following number (20s): 4327 1438 2146 2143. The element 1 is valid as a means of payment until 13.09.2023 (20e). There are no associations to verification codes or further elements 1 (20k).

Figure 7 shows a further non-limiting example of data that can be stored in said payment file 20f.

The economic availability 20c is equal to 150 US$ in shops with MCC 123456, and is equal to 350 US$ in shops of category A (let it be assumed that the shops of category A are those that sell pharmaceutical products).

The bank account which is operatively associated to the element 1, then to the payment file 20f, has the following number (20s): CH14213524A700K.

There is no time limitation for which the element 1 is a valid object of payment 20e.

There is an electronic association to a further element 1, identified by the number 45247 (number of the further primary file 14).

The example of figure 7 shows that the economic availability 14c, 20c, is a data that can be univocal, or can be a list of economic availability data, comprising a plurality of economic availability values, each univocally associated to a respective merchandise category (MCC) and/or to a respective limitation of temporal validity and/or to a respective geographical position and/or to a respective electronic association.

Thus it appears clear that the present disclosure shows a technical solution wherein the economic availability 14c, 20c is in the form of a list of economic availability data, wherein each data comprises a value of economic availability associated to a respective customized payment condition.

The numerical value of economic availability associated to a metadata indicative of a currency of said numerical value.

The Applicant has noted that in particular the images, when electronically compared, provide a result of full identity, but are - for example - identical by 99.95% of the pixels; the others, differ.

To this end, an embodiment of the distributed computing environment, and of the method, here described provides the use of a minimum threshold Th of similarity, which is used to consider two elements 1 and/or two characteristics 2, and/or the characteristic electronic data 14d of two files, "identical".

Figure 9 shows schematically the behavior of the distributed computing environment in relation to the minimum threshold Th. The graph shows on the abscissa increasing values of similarity and on the ordinate an authorization to the arrangement of the payment (transaction). Clearly, while the similarity values are continuous, the authorization to the arrangement of the payment can assume only two values: consented, denied.

This threshold is then a threshold of similarity between the characteristic electronic data 14d univocally identifying said at least a characteristic 2 of said element 1, contained in said primary file 14, and the electronic characteristic data identifying said at least a characteristic of said comparison file 414.

The minimum threshold Th, when exceeded, is destined to determine and/or force a logical identity between the characteristic electronic data 14d identifying at least the characteristic 2 of the comparison element 1 and stored in said comparison file 414 and the electronic characteristic data 14d identifying at least the characteristic 2 of the element 1 and stored in said primary file 14 and to authorize an arrangement of an electronic payment through the payment or financial instrument 21, 22.

The present disclosure also discloses a secondary computing environment, which is described as secondary because it also includes the subsystem of identification and verification of characteristics 2 given to a seller, for example to a legal person destined to sell the object 400.

The secondary computing environment properly said comprises first of all a verification data processing unit 412, operatively connected to an acquisition device 411.

The verification data processing unit 412 is configured to receiving from said acquisition device 411 characteristic electronic data 14d representing at least a characteristic 2 of a comparison element 1' real or virtual and owned or associated to a subject or user 100.

As it appears clear that in the light of the previous description, said characteristic 2 is electronically acquired through the acquisition device 11, and is suitable for and/or destined to, and/or configured to, allow a univocal identification of said comparison element 1'.

As it appears clear that from the previous wording, an embodiment of the secondary computing environment does not comprise the acquisition device 11 because that device can be strictu sensu of a holder different with respect to the holder of the secondary computing environment. A preferred embodiment, however, comprises the above-mentioned acquisition device 11.

The verification data processing unit 412 is configured to generate at least a comparison file 414 containing said characteristic electronic data 14d and to store said comparison file 414 in a memory 415. The comparison file 414 is mentioned here "of comparison" because the electronic data 14d contained therein are destined to be compared with corresponding counterparts contained in the primary file 14 in order to allow to verify the identity of the element 1.

The secondary distributed computing environment is configured to electronically access a data processing unit 12 operatively associated to a memory 15 upon which it is stored a primary file 14 generated through the previously described computing environment.

Because of the inclusion of the previously mentioned system, the secondary computing environment is configured to perform, in a time following the electronic access to the data processing unit 12, an electronic comparison between the comparison file 414 and the primary file 14.

If from said electronic comparison results that the comparison file 414 and said primary file 14 contain characteristic electronic data 14d identical or having greater similarity with respect to a predetermined minimum threshold Th of similarity, there is an arrangement of an electronic payment through said payment or financial instrument 21, 22.

Otherwise, there is an electronic denial 1010 to perform said electronic payment.

In an embodiment, if from the electronic comparison results that the comparison file 414 and the primary file 14 contain characteristic electronic data 14d identical or having greater similarity with respect to a predetermined minimum threshold Th of similarity, the secondary distributed computing environment is configured to:
- operatively connecting said acquisition device 411, and then the verification data processing unit 412, with said financial or banking institute 20 and/or with said payment or financial instrument 21, 22 for receiving a payment file 20f and/or with a memory 15 containing said primary file 14;
- receiving an economic availability 14c, 20c associated to said payment or financial instrument 21, 22.

In an embodiment, when from the electronic comparison results that said comparison file 414 and said primary file 14 contain characteristic electronic data 14d identical or having greater similarity with respect to a predetermined minimum threshold Th of similarity, the secondary distributed computing environment is configured to:
- electronically verifying, preferably from said primary file 14 or from the payment file 20f stored in the memory of said financial or banking institute 20, the presence of at least an additional payment condition, and if said at least an additional payment condition is present,
- electronically verifying if said at least an additional payment condition is met.

In particular, the verifying if said at least an additional payment condition is met comprises at least one among the following actions:
- electronically verifying a temporal validity of the element 1 as payment element, preferably comparing a current data and/or time with a memorized date and/or time of validity cessation 14e stored in said primary file 14 or in said payment file 20f;
- electronically verifying, through the verification data processing unit 412, the coherence and/or identity of an electronic verification code sent by said banking or financing institute 20 associated to said payment or financial instrument 21, 22 to an electronic device 101 associated to said subject or user 100 with a code electronically introduced in said verification data processing unit 412, in particular introduced by said subject or user 100 in said verification data processing unit 412;
- electronically verifying, through the verification data processing unit 412, a correct identification of at least a further element 1 a characteristic 2 thereof has been associated to a primary file 14, preferably through the steps described in the preceding portion of the description;
- electronically verifying, through the verification data processing unit 412, a coherence or identity between a position currently held by said element 1 with a geographical position of authorization, stored in said primary file 14 or in said payment file 20f.

The secondary distributed computing environment proceeds with the arrangement of the payment only when the electronic verification is successful.

In a non-limiting embodiment, the comparison file 414 is kept for a predetermined time, and in particular it is deleted following (preferably, immediately following) the arrangement of said payment or following the completion of the payment. Thanks to this technical characteristic the safety of the economic transaction is increased; likewise, it is increased the safety of use of the object 1 as the element of payment. In fact, the copy of the characteristic electronic data contained in the comparison file 414 is kept for a limited time. Subsequently, the data processing unit 412, or any other data processing unit of the secondary distributed computing environment causes an automatic deletion of the comparison file 414. When the comparison file has been deleted, there is a unique file that holds the characteristic electronic data of the object 1.

The present disclosure finally concerns a tertiary distributed computing environment, which is conceived for the purpose of performing a payment.

The tertiary distributed computing environment, in addition to comprising the previously described secondary distributed computing environment, it is also configured to electronically define a payment amount P, equal to or lower than the economic availability 20c associated to the payment or financial instrument 21, 22 and to perform the payment in a subsequent time.

The carrying out of the payment, which follows the arrangement of it, causes an electronic reduction of the economic availability 14c, 20c associated to the payment or financial instrument 21, 22, for an amount corresponding to the payment amount P.

In an embodiment, the tertiary distributed computing environment is configured to perform an electronic comparison between the payment amount P and the economic availability 14c, 20c or is configured to perform an electronic comparison between the payment amount P and the overall economic availability 20i of the payment or financial instrument 21, 22. An execution of said payment 2003 occurs only when, following said electronic comparison, results that the payment amount P is less than or equal to the economic availability 20c or to the overall economic availability 20i.

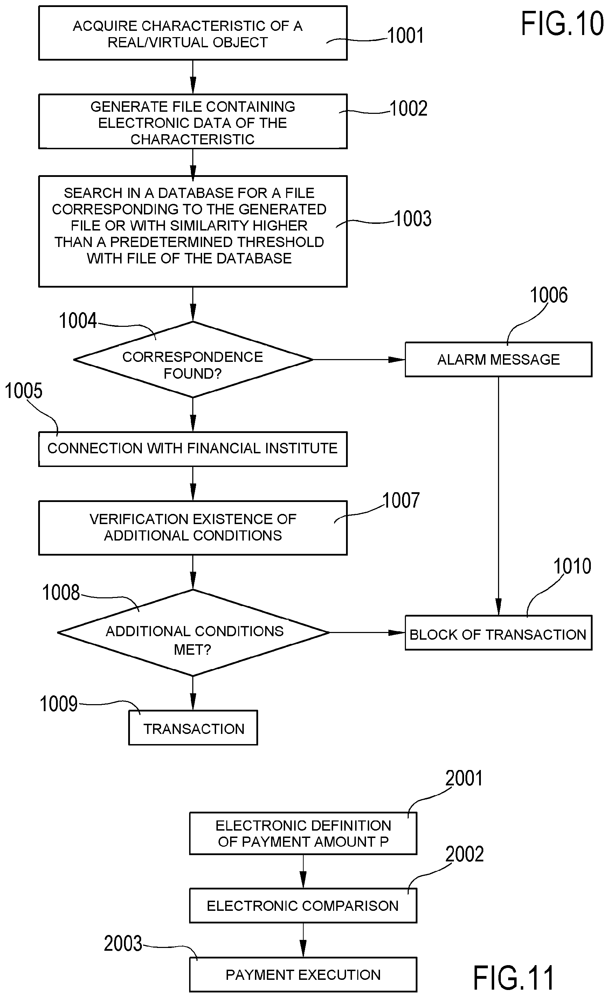

Figures 10 and 11 summarize the arrangement and the execution of the payment according to what is here described.

The block 1001 identifies a step of electronic acquisition of at least a characteristic of a comparison element real or virtual.

The block 1002 identifies the step of electronic generation of a comparison file 414, and it appears clear that this step of electronic generation follows in terms of time the step of electronic acquisition according to the block 1001.

The block 1003 identifies the step of electronic access to a database (memory 15) upon which it has been previously stored the primary file 14.

The block 1004 identifies a block of choice that is related to an electronic comparison between the characteristic electronic data 14d of the comparison file 414 and the characteristic electronic data of the primary file 14.

The block 1005 identifies an electronic connection with the financial credit institution 20; this electronic connection occurs only if from said step of electronic comparison results that said comparison file 414 and said primary file 14 contain characteristic electronic data identifying said characteristic 2 identical or having greater similarity with respect to a predetermined minimum threshold Th of similarity (block 1004, output S).

The block 1006 identifies a step of transmission of a warning message, for example visual or audio, which occurs where from said step of electronic comparison results that said comparison file 414 and said primary file 14 contain characteristic electronic data identifying said characteristic 2 different or having similarity lower with respect to the minimum threshold Th (block 1004, output N).

The block 1007 identifies a step of verification of the existence of additional or customized payment conditions; this step of verification in the diagram of figure 10 occurs following the electronic connection with the financial or banking institute 20, but in a further configuration could occur even before the electronic connection with the financial or banking institute 20.

The block 1008 is related to a step of electronic verification of whether the additional or customized payment conditions are met. The step of electronic verification here occurs clearly following the verification of whether, these conditions, exist or not.

The block 1009 is related to a step of arrangement of a payment (transaction). This step of arrangement is accessible only if from the step of verification of block 1008 the result is positive, i.e., the additional or customized payment conditions are met.

The block 1010 is related to a block (denial) of the transaction, that occurs following the transmission of the alarm message (block 1006) or when from the step of electronic verification of whether the additional or customized payment conditions are met, results that these additional or customized payment conditions are not met.

Where the characteristic 2 is acquired through an image captured by a camera, the step of electronic comparison comprises the execution of an image comparison and/or recognition algorithm. In an embodiment, this algorithm can first of all comprise a step of pre-processing of characteristic data 14d, which in this case are representative data of an image.

The step of pre-processing includes at least one between the following electronic operations:
- image rescaling and/or image resizing and/or elimination of perspective distortions;
- conversion of color spaces;
- filter application.

Following the step of pre-processing, the image comparison algorithm provides the use for example of algorithms MSE (Mean Squared Error), or SSIM (Structural Similarity Index) or Histogram comparison or image characteristic extraction and matching algorithms, which include for example SIFT (Scale-Invariant Feature Transform) and SURF (Speeded-Up Robust Features). An image characteristic extraction algorithm, also called element recognition algorithm based on characteristics, identifies elements in the image by detecting their distinguishing characteristics, as key points (for example, Harris points of interest or SIFT points) and descriptors (for example, SIFT or SURF descriptors). Elements are then recognized by comparing these characteristics with a database of known elements. The database of known elements is constituted by the memory 15.

Further image comparison and/or recognition algorithms exploited in the distributed computing environment here described comprise the use of convolutional neural networks (CNN). CNN networks are designed to automatically learn the characteristics of images through convolutional, pooling and fully connected layers. Deep neural networks, as deep convolutional neural networks (Deep CNNs), can carry out complex element recognition and perform image classification tasks.

Further image comparison and/or recognition algorithms exploited in the distributed computing environment here described comprise the use of two-way convolutional neural networks (Siamese CNNs). This type of CNN is used for the recognition of similar elements or for face recognition, and is particularly indicated where the element 1 is for example a digital image comprising a face of a subject. Two identical neural networks are trained to process two different instances of the image. Subsequently, the representations obtained from the two networks are compared to measure the similarity between the two instances.

Further image comparison and/or recognition algorithms exploited in the distributed computing environment here described comprise the use of recurrent neural networks (RNNs). RNNs are often used for the recognition of time sequences within images or videos. They can be used to track moving elements or for gesture or action recognition in video.

Further image comparison and/or recognition algorithms exploited in the distributed computing environment here described comprise algorithms based on unsupervised learning. These algorithms, as the principal component analysis (PCA) or clustering, can be used to identify similar patterns or groups of pixels within an image, without the need to explicitly label the data.

Further image comparison and/or recognition algorithms exploited in the distributed computing environment here described comprise classifiers based on Support Vector Machine (SVM). SVMs can be used for image recognition when the data have already been extracted as characteristics vectors. SVMs can subdivide different classes of images by a maximum margin.

Further image comparison and/or recognition algorithms exploited in the distributed computing environment here described comprise transferable convolutional neural networks (Transfer Learning). This approach pre-trains a CNN on a large dataset and then trains it further on a more specific dataset. This allows to use the knowledge gained from the pre-trained CNN for image recognition tasks with limited data.

Further image comparison and/or recognition algorithms exploited in the distributed computing environment here described comprise deep learning based on hierarchical structures. This approach provides the creation of more complex neural network structures that can hierarchically recognize elements, as parts of a face and then the complete face.

Further image comparison and/or recognition algorithms exploited in the distributed computing environment here described comprise recognition algorithms based on probabilistic models. These algorithms use probabilistic models, as the hidden Markov model (HMM), to model sequences of characteristics extracted from the images, making them suitable for gesture or action recognition in video.

In an embodiment, the data processing unit which performs the image comparison is not the verification data processing unit 412, which as it appears clear from the attached figures is directly connected to the acquisition device; the image comparison is performed by a further data processing unit or group of data processing unit (here defined computerized comparison system, to distinguish it from the data processing units here described) which is electronically activated by the verification data processing unit 412. The purpose of this technical characteristic is to avoid an excessive computational loading for the verification data processing unit 412, which can therefore advantageously also be distinguished by reduced data processing and, therefore, economic capability. This is particularly advantageous where the data processing unit concerned is provided as a tool to a pre-existing shop for the implementation of what is described here. Indeed, the more complex is the image to be processed, the greater is the computational loading required by the data processing assembly or by the data processing unit that physically processes the characteristic electronic data 14d of the two files.

It has been previously disclosed here that the primary file 14 can be a limited access file; in particular, where the comparison is made by said computerized comparison system, the characteristic data 14d of said primary file 14 will not be readable by said verification data processing unit 412, but only by said computerized comparison system.

The invention is not limited to the embodiments represented in the attached figures; for this reason, reference numbers and reference marks are provided in the claims for the sole purpose of increasing the intelligibility of the claims, and shall not to be intended as limiting.

It is finally clear that to the object of the present disclosure can be made additions, modifications or variants, which are obvious to an expert in the art, without departing from the scope provided by the attached claims.

## Claims

1. Method of electronic association between elements and payment systems, comprising:
- a step of electronic acquisition of at least a characteristic (2) of a real or virtual element (1), owned by, and/or associated to, a subject or user (100), through an acquisition device (11), preferably wherein said characteristic (2) is suitable for and/or destined to, and/or configured to, allow a univocal identification of said element (1);
- a step of electronic generation of a primary file (14) containing at least characteristic electronic data (14d), univocally identifying said at least a characteristic (2) of said element (1), and a step of memorization of said primary file (14) in a memory (15),
- a step of association, comprising an electronic association (A) between said primary file (14) and at least a payment or financial instrument (21, 22), preferably associated to a financial or banking institute (20), preferably said payment or financial instrument (21, 22) being owned by, and/or selectively assigned to, said subject or user (100),
- a step of assignment of an economic availability, said step of assignment of said economic availability being preferably result of, and/or temporally successive to, said step of association and comprising at least a univocal assignment, to said primary file (14), of an economic availability (20c) associated to said payment or financial instrument (21, 22),
- a step of provision of an electronic access, comprising making accessible, preferably to a remote verification data processing unit (412), an electronic search, on said memory (15), of at least said primary file (14), through an electronic comparison between at least a comparison file (414) containing characteristic electronic data (14d), identifying at least a characteristic (2) of a comparison element (1'), and said primary file (14).

2. Method according to claim 1, wherein said characteristic (2) is a univocal characteristic of said element (1) or is a characteristic destined to allow a univocal identification of said element (1),
and/or wherein said characteristic (2) is a characteristic physical and/or intrinsic and/or naturally present on said element (1) or is a characteristic (2) artificially brought on said element (1) and/or is a visible characteristic of said element (1) or is a hidden characteristic (2) of said element (1);
said characteristic (2) differing from an alphanumerical code and/or differing from a known visual code, and/or being a characteristic (2) representable through an image;
wherein said element (1) is different from an element traditionally used for a payment, preferably is different from an element traditionally used for an electronic payment, and/or wherein said element (1) is not a payment card, and/or is not a banknote, and/or is not a bank account,
and wherein said primary file (14) is a limited access file, preferably limited to said subject or user (100), in particular wherein:
- at least the characteristic electronic data (14d) of said primary file (14) can be altered exclusively by said subject or user (100) after an electronic introduction and verification of access credentials electronically entered by said subject or user (100) on an electronic user interface, and/or
- at least the characteristic electronic data (14d) of said primary file (14) can be read exclusively by said subject or user (100) after an electronic introduction and verification of access credentials electronically entered by said subject or user (100) on an electronic user interface, or by said verification data processing unit (412), and/or
- said financial or banking institute (20) has no access to said characteristic electronic data (14d).

3. Method according to claim 1 or claim 2, wherein said step of electronic acquisition is a step of scanning, and/or wherein said acquisition device (11) comprises at least one among the following devices: a camera, a file receiver, a roughness or weight identifier;
preferably wherein said step of scanning is a two-dimensional scan or is a three-dimensional scan, and wherein said camera is a two-dimensional or three-dimensional camera,
optionally wherein said camera is a camera operating in the visible and/or infrared and/or ultraviolet spectrum;
said characteristic electronic data (14d) being image data.

4. Method according to one or more of the preceding claims, comprising a step of definition of at least a customized payment condition, preferably comprising a step of definition of a plurality of customized payment conditions, wherein said at least one customized payment condition is a customized payment condition defined by the user, and is in use defined by the subject or user (100);
said at least a payment condition comprising at least one among:
- a temporal validity of said element (1) as payment element;
- an electronic association to an electronic verification code sent by said banking or financing institute (20) associated to said payment or financial instrument (21, 22) to an electronic device (101) associated to said subject or user (100), said electronic verification code acting as a means of confirmation to an execution of the payment;
- an electronic association to a further element (1) a characteristic (2) thereof has been associated to a primary file (14), preferably through the steps described in the method according to one or more of claims 1 to 3;
- a payment limitation as a function of a geographical position of said element (1) and/or of a merchandise category (MCC) associated to a payment;
preferably wherein said economic availability (20c) associated to said payment or financial instrument (21, 22) is equal to or lower than an overall economic availability (20i) of said payment or financial instrument (21, 22).

5. Method according to one or more of the preceding claims, comprising a step of provision of an electronic user interface, said step of provision being destined to allow, in particular said subject or user (100), to set, adapt or delete said at least one customized payment condition;
said method comprising, in alternative or in combination, a step of cancellation of said comparison file (414), automatically performed after said arrangement of said payment and/or after a step of execution of an electronic payment through said payment or financial instrument (21, 22).

6. Method according to claim 4 or claim 5, comprising a step of memorization of said at least a customized payment condition as additional data (14a; 14k, 14s, 14c, 14e) in said primary file (14) or as associated data (20k, 20s, 20e, 20c) of a payment file (20f) stored in a memory of said financial or banking institute (20).

7. Method according to one or more of the preceding claims, comprising a step of definition of a minimum threshold (Th) of similarity between the characteristic electronic data (14d), univocally identifying said at least a characteristic (2) of said element (1) and stored in said primary file (14) and the characteristic electronic data univocally identifying said at least a characteristic (2) of said comparison element (1) and stored in said comparison file (414), wherein said minimum threshold (Th) when exceeded, is destined to determine and/or force a logical identity between the characteristic electronic data stored in said comparison file (414) and the characteristic electronic data stored in said primary file (14) and to authorize an arrangement of an electronic payment through said payment or financial instrument (21, 22).

8. Method according to one or more of the preceding claims, comprising a step of modification of said element (1) comprising bringing to said element (1) said characteristic (2) by adapting a structural or physical characteristic thereof, and comprises selecting a casual and optionally non-repeatable characteristic or a casual and optionally non-repeatable characteristic defined in a predefined characteristics pattern.

9. Method of authorization of a payment, comprising,
- a step of electronic acquisition (1001) of at least a characteristic (2) of a real or virtual comparison element (1') owned by, and/or or associated to, a subject or user (100), through an acquisition device (411), preferably wherein said characteristic (2) is suitable for and/or destined to, and/or configured to, allow a univocal identification of said comparison element (1');
- a step of electronic generation (1002) of a comparison file (414) containing at least characteristic electronic data univocally identifying said at least a characteristic (2) of said comparison element (1') and a step of memorization of said file (414) in a memory (415);
- a step of electronic access to a data processing unit (12) operatively associated to a memory (15) upon which it is stored a primary file (14) generated in accordance to the method according to one or more of claims 1 to 8;
- a step of electronic comparison (1003, 1004), temporally following said step of electronic access, said step of electronic comparison (1003, 1004) comprising an electronic comparison between at least the comparison file (414) and said primary file (14);
wherein:
- if from said step of electronic comparison results that said comparison file (414) and said primary file (14) contain characteristic electronic data univocally identifying said characteristic (2) identical or having greater similarity with respect to a predetermined minimum threshold (Th) of similarity (1005), there is an arrangement (1009) of an electronic payment through said payment or financial instrument (21, 22), and
- otherwise, there is an electronic denial (1010) to said electronic payment.

10. Method according to claim 9, wherein if from said step of electronic comparison results that said comparison file (414) and said primary file (14) contain characteristic electronic data identifying said at least a characteristic (2) identical or having greater similarity with respect to a predetermined minimum threshold (Th) of similarity (1005), the method comprises:
- operatively connecting said acquisition device (411) with said financial or banking institute (20) and/or with said payment or financial instrument (21, 22) for accessing a payment file (20f) and/or said memory (15) for receiving said primary file (14);
- receiving an economic availability (14c, 20c) associated to said payment or financial instrument (21, 22) from said payment file (20f) and/or from said primary file (14);
optionally wherein said step of electronic comparison (1003, 1004) is performed by a verification data processing unit (412) operatively, optionally operatively and directly, connected to the acquisition device (411) or is performed by a computerized comparison system, electronically activated by said verification data processing unit (412) and remote and distinct with respect to said verification data processing unit (412).

11. Method according to one or more of the preceding claims 9-10, wherein said primary file (14) is a limited access file, preferably limited to said subject or user (100), in particular wherein:
- at least the characteristic electronic data (14d) of said primary file (14) can be altered exclusively by said subject or user (100) after an electronic introduction and verification of access credentials electronically entered by said subject or user (100) on an electronic user interface, and/or
- at least the characteristic electronic data (14d) of said primary file (14) can be read exclusively by said subject or user (100) after an electronic introduction and verification of access credentials electronically entered by said subject or user (100) on an electronic user interface, or by said verification data processing unit (412), and/or by said computerized comparison system, and/or
- said financial or banking institute (20) has no access to said characteristic electronic data (14d).

12. Method according to one or more of the preceding claims 9-11, wherein if from said step of electronic comparison results that said comparison file (414) and said primary file (14) contain characteristic electronic data (14d) identifying said at least a characteristic (2) identical or having greater similarity with respect to a predetermined minimum threshold (Th) of similarity (1005), the method comprises:
- electronically verifying, preferably by said primary file (14) or by the payment file (20f) stored in the memory of said financial or banking institute (20), the presence of at least an additional payment condition, and if said at least an additional payment condition is present,
- electronically verifying if said at least an additional payment condition is met;
preferably wherein verifying if said at least an additional payment condition is met comprises at least one among the following actions:
- electronically verifying a temporal validity of said element (1) as payment element, preferably comparing a current data and/or time with a memorized date and/or time of validity cessation (14e) stored in said primary file (14) or in said payment file (20f);
- electronically verifying, through a verification data processing unit (412) operatively associated to an acquisition device (411), the coherence and/or identity of an electronic verification code sent by said banking or financing institute (20) associated to said payment or financial instrument (21, 22) to an electronic device (101) associated to said subject or user (100) with a code electronically introduced in said verification data processing unit (412);
- electronically verifying, through a verification data processing unit (412) operatively associated to an acquisition device (411), a correct identification of at least a further element (1) a characteristic (2) thereof has been associated to a primary file (14), preferably through the steps described in one or more of claims 1 to 8;
- electronically verifying, through a verification data processing unit (412) operatively associated to an acquisition device (411), a coherence or identity between a position currently held by said element (1) with a geographical position of authorization, stored in said primary file (14) or in said payment file (20f);
and proceeding with said step of arrangement of said transaction (1009) only when the electronic verification gives a positive result.

13. Method for executing a payment, comprising:
- a method of authorization of a payment according to one or more of claims 9 to 12;
- a step of electronic definition (2001) of a payment amount (P), equal to or lower than said economic availability (20c) associated to said payment or financial instrument (21, 22);
- a step of execution of said payment (2003), comprising an electronic reduction of said economic availability (20c) associated to said payment or financial instrument (21, 22), for an amount corresponding to said payment amount (P);
optionally said method comprising an electronic comparison (2002) between said payment amount (P) and said economic availability (20c) associated to said payment or financial instrument (21, 22) or an electronic comparison (2002) between said payment amount (P) and an overall economic availability (20i) of said payment or financial instrument (21, 22), an execution of said payment (2003) only occurring when, following said electronic comparison (2002), results that said payment amount (P) is lower than or equal to said economic availability (20c) or to said overall economic availability (20i).

14. Distributed computing environment for the electronic association among elements and payment systems, comprising:
- a data processing unit (12), operatively connected to an acquisition device (11) and configured to receive from said acquisition device (11) characteristic electronic data (14d), univocally identifying at least a characteristic (2) of a real or virtual element (1) and owned or associated to a subject or user (100), and wherein said characteristic (2) is electronically acquired through the acquisition device (11), preferably wherein said characteristic is destined to allow the univocal identification of said element (1);
wherein
said data processing unit (12) is configured to generate at least a primary file (14) containing said characteristic electronic data (14d) and to store said primary file (14) in a memory (15);
the distributed computing environment being configured to perform an electronic association of said primary file (14) to at least a payment or financial instrument (21, 22), preferably associated to a financial or banking institute (20), preferably said payment or financial instrument (21, 22) being owned by, and/or selectively assigned to, said subject or user (100);
the distributed computing environment being configured to univocally assign, preferably as a result of said electronic association, and/or in subsequently to said electronic association, an economic availability (14c, 20c) to said primary file (14), wherein said economic availability (20c) is associated to said payment or financial instrument (21, 22),
the distributed computing environment is configured to provide an electronic access, preferably to a remote verification data processing unit (412), to perform an electronic search, on said memory (15), of at least said primary file (14), through an electronic comparison between at least a comparison file (414) containing characteristic electronic data (14d) identifying at least a characteristic of a comparison element (1) and said primary file (14).

15. Distributed computing environment according to claim 14, wherein said characteristic (2) is a univocal characteristic of said element (1) or is a characteristic destined to allow a univocal identification of said element (1),
and/or wherein said characteristic (2) is a characteristic physical and/or intrinsic and/or naturally present on said element (1) or is a characteristic (2) artificially brought on said element (1) and/or is a visible characteristic of said element (1) or is a hidden characteristic (2) of said element (1);
said characteristic (2) differing from an alphanumerical code and/or differing from a known visual code, and/or being a characteristic (2) representable through an image;
and wherein said element (1) is different from an element traditionally used for a payment, preferably is different from an element traditionally used for an electronic payment, and/or wherein said element (1) is not a payment card, and/or is not a banknote, and/or is not a bank account.

16. Distributed computing environment according to claim 14 or claim 15, comprising said acquisition device (11), and wherein said acquisition device (11) comprises at least one among the following devices: a camera, a file receiver, a roughness or weight identifier;
preferably wherein said acquisition device (11) is configured to perform a two-dimensional scan or a three-dimensional scan, and wherein said camera is a two-dimensional or three-dimensional camera,
optionally wherein said camera is a camera operating in the visible and/or infrared and/or ultraviolet spectrum.

17. Distributed computing environment according to one or more of the preceding claims 14-16, configured to allow to electronically define a customized payment condition, preferably being configured to allow to electronically define a plurality of customized payment conditions, wherein said at least a customized payment condition is a customized payment condition defined by the user, and is in use defined by the subject or user (100);
said at least a payment condition comprising at least one among:
- a temporal validity of said element (1) as payment element;
- an electronic association to an electronic verification code sent by said banking or financing institute (20) associated to said payment or financial instrument (21, 22) to an electronic device (101) associated to said subject or user (100), said electronic verification code acting as a means of confirmation to an execution of the payment;
- an electronic association to a further element (1) a characteristic (2) thereof has been associated to a primary file (14), preferably through the steps described in one or more of claims 1 to 8 or through the computing environment according to one or more of claims 13 to 16;
- a payment limitation as a function of a geographical position of said element (1) and/or of a merchandise category (MCC) associated to a payment;
preferably wherein said economic availability (20c) associated to said payment or financial instrument (21, 22) is equal to or lower than an overall economic availability (20i) of said payment or financial instrument (21, 22).

18. Distributed computing environment according to one or more of claims 14-17, comprising an electronic user interface configured to allow, in particular said subject or user (100), to set, adapt or delete said at least a customized payment condition;
in alternative or in combination, said distributed computing environment being configured to automatically perform a deletion of said comparison file (414) after said arrangement of said payment and/or after a step of execution of an electronic payment through said payment or financial instrument (21, 22).

19. Distributed computing environment according to claim 17 or claim 18, configured to store said at least a customized payment condition as additional data (14a; 14k, 14s, 14c, 14e) in said primary file (14) or as associated data (20k, 20s, 20e, 20c) of a payment file (20f) stored in a memory of said financial or banking institute (20).

20. Distributed computing environment according to one or more of the preceding claims 14-19, configured to allow to define a minimum threshold (Th) of similarity between the characteristic electronic data (14d) univocally identifying said at least a characteristic (2) of said element (1) in said primary file (14) and the characteristic electronic data (14d) univocally identifying said at least a characteristic (2) of said comparison element (1) in said comparison file (414), wherein said minimum threshold (Th) when exceeded, is destined to determine and/or force a logical identity between the characteristic electronic data (14d) stored in said comparison file (414) and the characteristic electronic data (14d) stored in said primary file (14) and to authorize an arrangement of an electronic payment through said payment or financial instrument (21, 22).

21. Distributed computing environment according to one or more of claims 14-20, wherein said element (1) is modified by bringing to said element (1) said characteristic (2) that adapts a structural or physical characteristic thereof, and is modified starting from a casual and optionally non-repeatable characteristic or a casual and optionally non-repeatable characteristic defined in a predefined characteristic pattern selected as said characteristic (2).

22. Secondary distributed computing environment, for authorizing a payment, comprising:
- a verification data processing unit (412), operatively connected to an acquisition device (411) and configured to receive from said acquisition device (411) characteristic electronic data (14d) univocally identifying at least a characteristic (2) of a real or virtual comparison element (1') and owned or associated to a subject or user (100), and wherein said characteristic (2) is electronically acquired through the acquisition device (11), preferably wherein said characteristic is destined to allow the univocal identification of said comparison element (1');
wherein
said verification data processing unit (412) is configured to generate at least a comparison file (414) containing said characteristic electronic data (14d) and to store said comparison file (414) in a memory (415);
the secondary distributed computing environment being configured to electronically access the data processing unit (12) operatively associated to a memory (15) upon which it is stored a primary file (14) generated through the computing environment according to one or more of claims 14-21;
the secondary distributed computing environment being configured to perform, in a time following the electronic access to the data processing unit (12), an electronic comparison (1003, 1004) between said comparison file (414) and said primary file (14);
and wherein
- if from said electronic comparison results that said comparison file (414) and said primary file (14) contain characteristic electronic data (14d) identifying said at least a characteristic identical or having greater similarity with respect to a predetermined minimum threshold (Th) of similarity (1005), there is an arrangement (1009) of an electronic payment through said payment or financial instrument (21, 22), and
- otherwise, there is an electronic denial (1010) to said electronic payment;
optionally wherein said secondary distributed computing environment is configured to make said verification data processing unit (412) perform said electronic comparison operatively, optionally operatively and directly, connected to the acquisition device (411) or a computerized comparison system, electronically activated by said verification data processing unit (412) and remote and distinct with respect to said verification data processing unit (412).

23. Distributed computing environment according to one or more of the preceding claims 14-22, wherein said primary file (14) is a limited access file, preferably limited to said subject or user (100), in particular wherein:
- at least the characteristic electronic data (14d) of said primary file (14) can be altered exclusively by said subject or user (100) after an electronic introduction and verification of access credentials electronically entered by said subject or user (100) on an electronic user interface, and/or
- at least the characteristic electronic data (14d) of said primary file (14) can be read exclusively by said subject or user (100) after an electronic introduction and verification of access credentials electronically entered by said subject or user (100) on an electronic user interface, or by said verification data processing unit (412), and/or by said computerized comparison system, and/or
- said financial or banking institute (20) has not access to said characteristic electronic data (14d).

24. Secondary distributed computing environment according to claim 22 or claim 23, wherein if from said electronic comparison results that said comparison file (414) and said primary file (14) contain characteristic electronic data (14d) identical or having greater similarity with respect to a predetermined minimum threshold (Th) of similarity (1005), the secondary distributed computing environment is configured to:
- operatively connect said acquisition device (411) with said financial or banking institute (20) and/or with said payment or financial instrument (21, 22) for accessing said payment file (20f) and/or with a memory (15) containing said primary file (14) for accessing said primary file (14);
- receive an economic availability (14c, 20c) associated to said payment or financial instrument (21, 22) from said payment file (20c) and/or from said primary file (14).

25. Secondary distributed computing environment according to one or more of the preceding claims 22-24, wherein if from said electronic comparison results that said comparison file (414) and said primary file (14) contain characteristic electronic data (14d) identical or having greater similarity with respect to a predetermined minimum threshold (Th) of similarity (1005), the secondary distributed computing environment is configured to:
- electronically verifying, preferably by said primary file (14) or by the payment file (20f) stored in the memory of said financial or banking institute (20), the presence of at least an additional payment condition, and if said at least an additional payment condition is present,
- electronically verifying if said at least an additional payment condition is met;
preferably wherein verifying if said at least an additional payment condition is met comprises at least one among the following actions:
- electronically verifying a temporal validity of said element (1) as payment element, preferably comparing a current data and/or time with a memorized date and/or time of validity cessation (14e) stored in said primary file (14) or in said payment file (20f);
- electronically verifying, through a verification data processing unit (412) operatively associated to an acquisition device (411), the coherence and/or identity of an electronic verification code sent by said banking or financing institute (20) associated to said payment or financial instrument (21, 22) to an electronic device (101) associated to said subject or user (100) with a code electronically introduced in said verification data processing unit (412);
- electronically verifying, through a verification data processing unit (412) operatively associated to an acquisition device (411), a correct identification of at least a further element (1) a characteristic (2) thereof has been associated to a primary file (14), preferably through the steps described in claim 1;
- electronically verifying, through a verification data processing unit (412) operatively associated to an acquisition device (411), a coherence or identity between a position currently held by said element (1) with a geographical position of authorization, stored in said primary file (14) or in said payment file (20f);
and proceeding with said step of arrangement of said transaction (1009) only when the electronic verification gives a positive result.

26. Tertiary distributed computing environment, for executing a payment, comprising:
- a secondary distributed computing environment, according to one or more of claims 22-25;
said tertiary distributed computing environment being configured to:
- electronically define (2001) a payment amount (P), equal to or lower than said economic availability (20c) associated to said payment or financial instrument (21, 22);
- execute said payment (2003), electronically reducing said economic availability (14c, 20c) associated to said payment or financial instrument (21, 22), for an amount corresponding to said payment amount (P);
optionally said third distributed computing environment being configured to perform an electronic comparison (2002) between said payment amount (P) and said economic availability (20c) associated to said payment or financial instrument (21, 22) or an electronic comparison (2002) between said payment amount (P) and an overall economic availability (20i) of said payment or financial instrument (21, 22), an execution of said payment (2003) only occurring when, following said electronic comparison (2002), results that said payment amount (P) is lower than or equal to said economic availability (20c) or to said overall economic availability (20i).
